# EUROPÄISCHE PATENTSCHRIFT

(11) **EP 2 334 917 B1**
(45) Veröffentlichungstag und Bekanntmachung des Hinweises auf die Patenterteilung: **11.07.2012**
(21) Anmeldenummer: 09782684.6
(22) Anmeldetag: 07.09.2009
(51) Int. Cl.: F01N 3/20

(54) **TANK FÜR EIN REDUKTIONSMITTEL MIT HEIZEINRICHTUNGEN**
TANK FOR A REDUCING AGENT HAVING HEATING UNITS
RÉSERVOIR POUR UN AGENT DE RÉDUCTION AVEC DISPOSITIFS DE CHAUFFAGE

(30) Priorität: 24.09.2008 DE 102008048798
(43) Veröffentlichungstag der Anmeldung: 22.06.2011
(73) Patentinhaber: Emitec Gesellschaft für Emissionstechnologie mbH, 53797 Lohmar (DE)
(72) Erfinder: HODGSON, Jan, 53840 Troisdorf (DE); BRÜCK, Rolf, 51429 Bergisch Gladbach (DE)
(74) Vertreter: Rössler, Matthias
(86) Internationale Anmeldenummer: PCT/EP2009/061542
(87) Internationale Veröffentlichungsnummer: WO 2010/034609

(56) Entgegenhaltungen:
- EP-A- 1 473 447
- DE-A1- 10 337 572
- DE-A1- 19 935 920
- DE-A1-102005 046 029
- DE-A1-102005 059 581
- DE-A1-102006 046 900
- DE-A1-102006 061 735

## Beschreibung

Die vorliegende Erfindung betrifft einen Tank für ein Reduktionsmittel mit zumindest einer Heizeinrichtung.

Infolge der gestiegenen Anforderungen an die Begrenzung des Schadstoffausstoßes von Kraftfahrzeugen, insbesondere von Personenkraftfahrzeugen und Nutzfahrzeugen, werden vermehrt SCR-Systeme in den Kraftfahrzeugen verbaut, die eine Reduzierung der im Abgas enthaltenen Stickoxide bewirken. Für diese SCR-Systeme wird ein Reduktionsmittel (auch in Form eines Reduktionsmittelvorläufers) eingesetzt, das mit dem Abgas in Verbindung gebracht wird. Als Reduktionsmittel wird insbesondere eine wässrige Harnstofflösung eingesetzt (z. B. Adblue), die einen Gefrierpunkt von ungefähr -11°C aufweist.

Für das flüssige Reduktionsmittel wird regelmäßig ein Tank in den Kraftfahrzeugen vorgesehen, der einerseits eine ausreichende Reichweite des Kraftfahrzeuges ermöglicht und andererseits so ausgelegt ist, dass das flüssige Reduktionsmittel zu allen Betriebspunkten des Kraftfahrzeuges einsetzbar ist. Dabei sind insbesondere Heizeinrichtungen vorgesehen, die das flüssige Reduktionsmittel bei kalten Temperaturen einerseits nach einer längeren Standzeit des Fahrzeuges erneut verflüssigen und andererseits während des Betriebes des Kraftfahrzeuges das Reduktionsmittel in flüssigem Zustand halten. Dabei sind diese Heizeinrichtungen bisher nur in den Leitungsbereichen des SCR-Systems vorgesehen gewesen oder in den Entnahmevorrichtungen des Tanks, z. B. in dem Entnahmerohr. Zudem sind kleinvolumige Zwischenspeicher bekannt, die unabhängig vom Haupttankvolumen eigene Heizeinrichtungen aufweisen und somit beschleunigt in ausreichender Weise erwärmt werden können siehe z.B. DE 10 2005 046 029 A1. Hierbei ist jedoch zu beachten, dass entweder nur kleine Volumen durch diese Heizeinrichtungen verflüssigbar sind und/oder spezielle Anlagekomponenten, wie zusätzliche Zwischenspeichertanks, vorgehalten werden müssen, um ausreichend flüssiges Reduktionsmittel zur Abgasreinigung bereitzustellen. Eine weitere wichtige Anforderung an derartige Heizeinrichtungen ist zudem, dass die Heizeinrichtungen eine möglichst geringe Menge Energie verbrauchen, so dass die Stromspeicher bzw. Stromversorger des Kraftfahrzeuges in möglichst geringem Maße belastet werden.

Aufgabe der Erfindung ist es daher, die mit Bezug auf den Stand der Technik geschilderten Probleme zumindest teilweise zu lösen und insbesondere einen Tank mit einer Heizeinrichtung anzugeben, die energetisch sparsam betreibbar ist und möglichst wenige weitere Komponenten benötigt, um das Reduktionsmittel in flüssigem Zustand und damit betriebsbereit bereit zu stellen.

Diese Aufgaben werden gelöst mit einem Tank gemäß den Merkmalen des Patentanspruchs 1. Weitere vorteilhafte Ausgestaltungen der Erfindungen sind in den abhängig formulierten Patentansprüchen angegeben. Es ist darauf hinzuweisen, dass die in den abhängig formulierten Unteransprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorliegend wird die Aufgabe durch einen Tank für ein Reduktionsmittel gelöst, zumindest aufweisend zumindest eine Seitenwand und einen Boden, wobei wenigstens in der Seitenwand oder in dem Boden zumindest eine Heizeinrichtung vorgesehen ist. Der Tank kann eine nahezu beliebige äußere Form aufweisen, insbesondere mit zumindest teilweise runden oder auch vieleckigen Bereichen, die an die räumlichen Verhältnisse des Kraftfahrzeuges angepasst sind. Dabei weist der Tank insbesondere im oberen Bereich eine Entnahmevorrichtung für das im Tank enthaltene Reduktionsmittel auf, insbesondere ein Entnahmerohr, das sich in den Tank hinein erstreckt. Diese Entnahmevorrichtung ist bevorzugt an einem oberen Wandbereich des Tanks angeordnet, so dass das Reduktionsmittel zumindest nicht dauerhaft die für eine Entnahmevorrichtung notwendigen Dichtungen beaufschlagen kann.

Die zumindest eine Seitenwand des Tanks ist bevorzugt umlaufend zwischen dem oberen Wandbereich und dem Boden des Tanks angeordnet. Der Boden des Tanks ist der Bereich, der insbesondere immer mit Reduktionsmittel bedeckt ist oder bei zunehmender Entleerung des Tanks wenigstens die zuletzt bedeckte Oberfläche des Tanks definiert.

Die Heizeinrichtung ist in der Seitenwand und/oder in dem Boden eingegossen oder einlaminiert. Die Heizeinrichtung ist bevorzugt aus Heizdrähten aufgebaut, die innerhalb der Seitenwand angeordnet sind. Die Seitenwand oder der Boden weisen dazu eine Wandung auf, die insbesondere nach außen isoliert ausgeführt und zum Tankinneren hin mit einem guten Wärmeübergaugswert ausgestattet ist. "In" der Seitenwand oder "in" dem Boden bedeutet, dass die Heizeinrichtung vom Material der Seitenwand/des Bodens umgeben ist, also insbesondere vollständig von diesem Material eingeschlossen ist.

Durch die Anordnung der Heizeinrichtung in dem Tank für ein Reduktionsmittel wird insbesondere erreicht, dass keine zusätzlichen Speichertanks zwischen dem Tank für das Reduktionsmittel und einer Zugabeeinrichtung des Reduktionsmittels in die Abgasanlage vorgehalten werden muss. Dafür ist die Heizeinrichtung in der Seitenwand und/oder in dem Boden angeordnet, so dass insbesondere großflächig die wandnahen Bereiche eines gefrorenen Reduktionsmittels erneut verflüssigt und dem Entnahmerohr zugefügt werden können. Insbesondere durch die Anordnung der Heizeinrichtung im Bodenbereich wird eine ständig von Reduktionsmittel bedeckte und ausreichend große Fläche erwärmt und somit die benötigte Menge an Reduktionsmittel bereitgestellt. Die großflächige Anordnung der Heizeinrichtung in der Wandung des Tankes ist insbesondere von Bedeutung hinsichtlich eines ständig unterbrochenen Betriebs eines Kraftfahrzeuges, wodurch das flüssige Reduktionsmittel in kurzen Intervallen einfriert und erneut aufgetaut werden muss. Für derartige Beanspruchungen sind herkömmliche Heizeinrichtungen, die nur kleinste Reduktionsmittelmengen zügig verflüssigen können, nicht vorgesehen. In diesem Fall bleibt das Hauptvolumen des Reduktionsmittels im Tank zunächst gefroren und es bilden sich um die lokal angeordneten Heizeinrichtungen, insbesondere um das Entnahmerohr, Kavernen mit flüssigem Reduktionsmittel. Nach Entnahme des in diesen Teilbereichen verflüssigten Reduktionsmittels wird die Wärmeenergie der Heizeinrichtungen durch die dann vorliegenden, nur mit Luft gefüllten, Hohlräume nur in ungenügendem Maß an die gefrorenen anderen Bereiche des Reduktionsmittels innerhalb des Tanks übertragen, so dass weiteres flüssiges Reduktionsmittel nicht in ausreichender Menge bereitgestellt werden kann.

Die Anordnung einer Heizeinrichtung in der Seitenwand ist insbesondere dahingehend vorteilhaft, dass sie ein Ablösen des gefrorenen Reduktionsmittels von der Wandung ermöglicht und dementsprechend ein Nachrutschen des gefrorenen Reduktionsmittels in Richtung des Bodens erlaubt bzw. fördert. So kann die einer Entnahmevorrichtung benachbarte, insbesondere im Boden angeordnete, Heizeinrichtung Heizenergie in ausreichender Menge in das gefrorene Reduktionsmittel übertragen, so dass dauerhaft keine Hohlräume entstehen, sondern ein regelmäßig guter Wärmeübergang von Wandung zu gefrorenem Reduktionsmittel bzw. flüssigem Reduktionsmittel ermöglicht wird.

In Weiterbildung der Erfindung wird vorgeschlagen, dass der Tank zumindest teilweise einen sich in Richtung des Bodens vergrößernden Querschnitt aufweist. Der Querschnitt ist hier die insbesondere von den Seitenflächen eingeschlossene, senkrecht zur Schwerkraft angeordnete Fläche, die sich in Richtung des Bodens vergrößert, so dass das gefrorene Reduktionsmittel allein durch den Schwerkrafteinfluss sich in Richtung des Bodens absenkt. Dieser Effekt wird vorzugsweise dadurch verstärkt, dass in den Seitenwänden Heizeinrichtungen vorgesehen sind, die die Ablösung des gefrorenen Reduktionsmittels ermöglichen und/oder beschleunigen.

Eine andere Weiterbildung sieht vor, dass der Boden zumindest eine Senke und/oder zumindest einen Sumpf aufweist. Dabei wird mit Sumpf ein mit dem Tank verbundenes Teilvolumen bezeichnet, das im Boden angeordnet ist und zur Sammlung des flüssigen Reduktionsmittels geeignet ist, wobei sich die Entnahmevorrichtung in den Sumpf hinein erstreckt. Als Senke ist im Zusammenhang mit der vorliegenden Erfindung bevorzugt ein Bereich bezeichnet, der ein gegenüber dem Restbereich des Bodens abgesenktes Niveau aufweist. Das verflüssigte Reduktionsmittel oder auch ein Rest des Reduktionsmittels sammelt sich regelmäßig im Bereich der Senke oder in einem der Senke angeschlossenen Sumpf und wird dort durch eine Entnahmevorrichtung entnommen.

Gemäß einer weiteren zweckmäßigen Ausführungsform weist der Boden zumindest in Teilbereichen ein progressives Gefälle wenigstens in Richtung der Senke oder des Sumpfes auf. In Sonderanwendungen kann jedoch auch ein degressives Gefälle vorteilhaft sein. Gegenüber einer ebenen Ausführung ist bei einer Ausführung des Bodens mit einem Gefälle insbesondere vorteilhaft, dass sich das Reduktionsmittel in gefrorener oder flüssiger Form infolge der Schwerkraft in Richtung der Senke oder des Sumpfes und dabei in Richtung der Entnahmevorrichtung anordnet. Dabei können unterschiedliche Ausführungen des Bodens, insbesondere solche mit progressiven oder degressiven Gefälle, eine solche Anordnung des Reduktionsmittels beschleunigen bzw. verstärken. Insbesondere durch die Ausführung mit progressivem Gefälle ergibt sich ein schnell kleiner werdender Querschnitt des Tankvolumens in Richtung der Senke bzw. des Sumpfes, so dass hier die Heizeinrichtung ein noch kleineres Volumen des Reduktionsmittels flüssig halten bzw. verflüssigen muss.

Gemäß einer besonders bevorzugten Ausführungsform ist vorgesehen, dass wenigstens die eine Seitenwand oder der Boden zumindest einen Steg aufweist, der sich in ein Tankinneres hinein erstreckt und der zumindest eine Steg eine Heizeinrichtung aufweist. Als Steg ist in diesem Zusammenhang ein schmales Flächenelement bezeichnet, das bevorzugt aus gleichem Material wie der Tank gefertigt sein kann. Insbesondere weist dieser Steg gute Wärmeleitungseigenschaften auf, so dass die, bevorzugt in dem Steg angeordnete, Heizeinrichtung möglichst effektiv betreibbar ist, bevorzugt symmetrisch zu allen Seiten.

Der Steg kann zudem als Einfaltung ausgeführt sein, also z. B. durch eine balgartige Verformung des Tankes erzeugt werden. Dabei können auch in der Wandung des Tankes vorhandene Heizeinrichtungen mit verformt werden, so dass diese dann in dem Steg innerhalb des Tankes angeordnet sind. Für eine derartige balgartige Verformung des Tankes ist die Tankoberfläche vergrößert auszuführen, so dass das gewünschte Tankvolumen auch nach Erzeugung des Steges aus der Wandung des Tankes vorhanden ist.

Der zumindest eine Steg ist derart in dem Tankinneren angeordnet, dass einerseits die Entnahmeeinrichtung möglichst schnell mit ausreichend Reduktionsmittel versorgt ist und andererseits eine Hohlraumbildung innerhalb des gefrorenen Reduktionsmittels im Tank vermieden wird, die eine weitere Verflüssigung des Reduktionsmittels beeinträchtigt. Dazu kann der Steg unter einer Neigung zum Boden und/oder zu den Seitenwänden angeordnet sein, so dass einerseits gefrorenes Reduktionsmittel zu beheizten Wandbereichen nachrutschen und diese kontaktieren kann und somit schneller verflüssigt wird. Weiter können durch die Stege stärker beheizte Teilbereiche des Tankes gebildet werden, innerhalb derer eine ausreichende Menge Reduktionsmittel sehr schnell verflüssigt wird.

Gemäß einer weiteren vorteilhaften Ausführungsform des Tanks ist zur Entnahme von Reduktionsmittel aus dem Tank ein Entnahmerohr vorgesehen, wobei das Entnahmerohr zumindest eine Rippe auf einer Außenumfangsfläche aufweist, und das Entnahmerohr und die zumindest eine Rippe durch zumindest eine Heizeinrichtung beheizt werden. Die Rippe ist insbesondere aus gleichem Material im Hinblick auf Entnahmerohr und/oder Tankwerkstoff hergestellt.

Durch die Anordnung einer Rippe auf dem Entnahmerohr wird die beheizte Zone innerhalb des Tanks stark vergrößert und insbesondere kann durch das Zusammenwirken mit Stegen und Heizeinrichtungen in Boden- und/oder Seitenwänden eine Hohlraumbildung innerhalb des gefrorenen Reduktionsmittels vermieden werden, die die weitere Verflüssigung von Reduktionsmittel beeinträchtigt.

Gemäß einer weiteren vorteilhaften Ausführungsform des Tanks sind die Heizeinrichtungen, angeordnet in zumindest einem Element der Gruppe Seitenwand, Boden, Steg, Entnahmerohr, Rippe, voneinander unabhängig regelbar. Insbesondere sind die Heizeinrichtungen in Abhängigkeit vom Befüllungsgrad des Tanks mit Reduktionsmittel, von der Tankneigung und/oder von der Bedeckung der Heizeinrichtung mit Reduktionsmittel in ihrer Heizleistung regelbar. In vorteilhafter Weise sind die Heizeinrichtungen zudem in Abhängigkeit von Reduktionsmittel, Reduktionsmitteltemperatur und/oder Außentemperatur voneinander unabhängig regelbar.

Durch eine derartige individuelle und von anderen Parametern abhängige Regelung der Heizeinrichtungen kann insbesondere ein energetisch sparsamer Betrieb vorgenommen und andererseits eine Hohlraumbildung innerhalb des Tankes unter allen Umständen vermieden werden. Somit kann regelmäßig eine Bereitstellung von flüssigem Reduktionsmittel für das Entnahmerohr garantiert werden.

Gemäß einer weiteren vorteilhaften Ausführungsform weist die zumindest eine Heizeinrichtung ein PTC-Element auf, so dass eine Eigenregelung der Heizeinrichtungen ermöglicht ist. PTC- (positive temperature coefficient) Elemente sind Bauelemente, deren Innenwiderstand sich zu höheren Temperaturwerten nichtlinear erhöht. Dadurch wird ein Selbstregeleffekt erzielt, der eine Selbstabschaltung zur Folge hat, wenn eine Grenztemperatur erreicht wird. Durch den Einsatz von PTC-Elementen ist es also möglich, dass die Heizeinrichtungen sich nur bis zu einer vorgegebenen Grenztemperatur erwärmen, die in erster Linie durch das verwendete Seitenwand-, Boden-, Rippe- und/oder Stegmaterial vorgegeben ist.

Bevorzugt ist auch eine Ausgestaltung, bei der die Heizeinrichtung zumindest teilweise Motorkühlwasser als Heizmedium verwendet, also demnach insbesondere mit einem Kühlkreislauf des Motors verbunden bzw. gezielt verbindbar ist.

Die zumindest eine Seitenwand, der Boden, der Steg oder die zumindest eine Rippeweisen eine Oberfläche auf und auf dieser Oberfläche sind zumindest teilweise Kanalstrukturen ausgebildet. Die Kanalstrukturen sind insbesondere als rillenartige Vertiefungen auf der Oberfläche ausgebildet, durch die das verflüssigte Reduktionsmittel fließen kann. Die Kanalstrukturen sind insbesondere dafür vorgesehen, dass zumindest teilweise vorhandenes gefrorenes Reduktionsmittel sich nicht derart auf der Seitenwand, dem Boden, dem Steg oder der Rippe absetzen kann, dass ein Abfluss von verflüssigtem Reduktionsmittel in Richtung zu der Senke oder zu dem Sumpf verhindert wird. Durch als Vertiefungen bzw. Rillen ausgeführte Kanäle lagert sich das gefrorene Reduktionsmittel auf den Oberflächen ab und kann über die ausgebildeten Kanalstrukturen unter dem gefrorenen Reduktionsmittel abfließen.

Die Kanalstrukturen verlaufen im Wesentlichen in Richtung hin zu der Senke oder dem Sumpf. Damit wird in vorteilhafter Weise erreicht, dass das Reduktionsmittel bis zum tiefsten Punkt des Tankes bzw. zu dem Entnahmerohr hingeleitet wird, und dass der Tank immer über flüssiges Reduktionsmittels im Bereich des Entnahmerohrs verfügt.

Gemäß einer weiteren vorteilhaften Ausführungsform weist ein Kraftfahrzeug zumindest einen **erfindungsgemäßen** Tank auf.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt sind. Für gleiche Gegenstände werden in den Figuren auch gleiche Bezugszeichen verwendet. Weitere Ausgestaltungen werden anhand der nachfolgenden Figuren näher erläutert. Es zeigen schematisch:
- Fig. 1:: einen Tank gemäß dem Stand der Technik;
- Fig. 2:: einen erfindungsgemäßen Tank; und
- Fig. 3:: eine weitere Ausgestaltung eines erfindungsgemäßen Tanks.

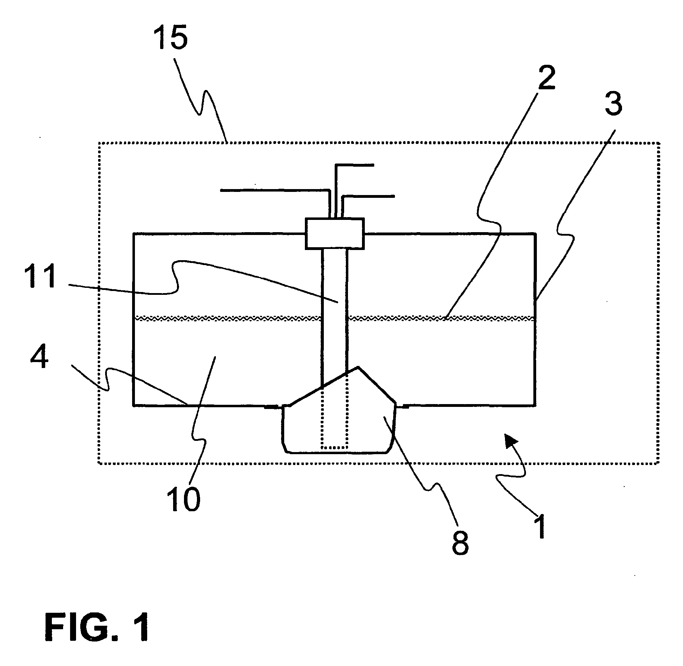

Fig. 1 zeigt schematisch in einer Seitenansicht einen Tank 1 gemäß dem Stand der Technik für ein Reduktionsmittel 2 mit einer Seitenwand 3 und einem Boden 4, wobei über ein Entnahmerohr 11 das Reduktionsmittel 2 aus dem Tankinneren 10, insbesondere aus einem Sumpf 8, entfernt wird. Der Tank 1 ist in einem Kraftfahrzeug 15 angeordnet.

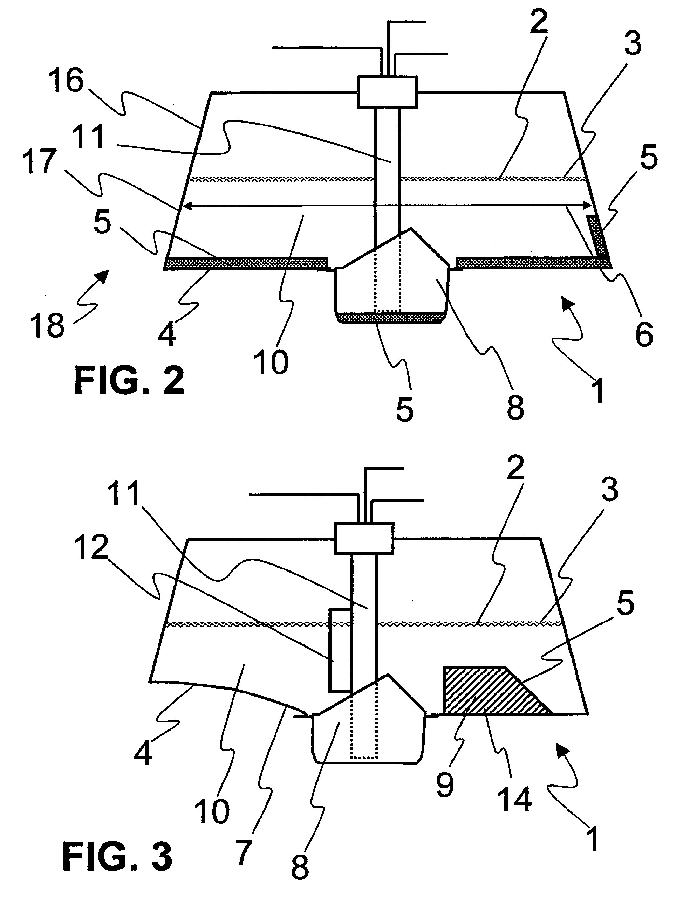

Fig. 2 zeigt schematisch in einer Seitenansicht einen Tank 1 gemäß der vorliegenden Erfindung. Der Tank 1 weist Seitenwände 3 und einen Boden 4 auf, wobei die Seitenwände 3 sich konisch in Richtung Boden 4 erweitern. Damit wird der Querschnitt 6 des Tankes 1 zum Boden 4 hin größer. Das Entnahmerohr 11 ist in einem Sumpf 8 angeordnet, der den tiefsten Punkt des Bodens 4 bildet. Im Boden 4, im Sumpf 8 und in zumindest einer Seitenwand 3 ist jeweils eine Heizeinrichtung 5 in der Wandung 16 ausgebildet, die insbesondere eigene unabhängig voneinander regelbare Heizkreise aufweisen. Dabei sind die Wandungen 16 zu der dem Tankinneren 10 zugewandten Seite mit einer guten Wärmeleitung ausgeführt und gegenüber der Tankumgebung 18 mit einer Isolierung 17.

Fig. 3 zeigt eine weitere Ausgestaltung des erfindungsgemäßen Tanks 1 mit der Seitenwand 3 und dem Boden 4 wobei ein Teilbereich, hier die linke Seite des Tankes 1, einen Boden 4 aufweist mit einer Senke 7, wobei Boden 4 hier in dem Teilbereich ein progressives Gefälle aufweist, das zum Sumpfelement hin gerichtet ist. Weiter sind in dem Tank 1 zumindest eine Rippe 12 auf dem Entnahmerohr 11 angeordnet und ein Steg 9 auf dem Boden 4 mit einer Kanalstruktur 14, die sich in Richtung des Sumpfes 8 erstreckt. Teilweise ist der Steg 9 insbesondere auch unter einer Neigung gegenüber dem Boden 4 angeordnet, so dass sich gefrorenes Reduktionsmittel 2 auch auf dem, im Vergleich zur Seitenwand 3 kleinflächigen Steg 9 abstützt. In Kombination mit dem sich zum Boden 4 erweiternden Querschnitt 6 der Seitenwände 3 und dem Einsatz von beheizten Stegen 9 wird zu allen Betriebspunkten genügend Reduktionsmittel 2 verflüssigt und dem Entnahmerohr 11 zugeführt, so dass eine Versorgung des SCR-Systems mit Reduktionsmittel 2 zu allen Zeitpunkten möglich ist.

### Bezugszeichenliste

- 1: Tank
- 2: Reduktionsmittel
- 3: Seitenwand
- 4: Boden
- 5: Heizeinrichtung
- 6: Querschnitt
- 7: Senke
- 8: Sumpf
- 9: Steg
- 10: Tankinneres
- 11: Entnahmerohr
- 12: Rippe
- 13: Außenumfangsfläche
- 14: Kanalstrukturen
- 15: Kraftfahrzeug
- 16: Wandung
- 17: Isolierung
- 18: Tankumgebung

## Patentansprüche

1. Tank (1) für ein Reduktionsmittel (2), zumindest aufweisend zumindest eine Seitenwand (3) und einen Boden (4), wobei wenigstens in der Seitenwand (3) oder in dem Boden (4) zumindest eine Heizeinrichtung (5) vorgesehen ist, wobei die Heizeinrichtung innerhalb der Seitenwand (3) und/oder innerhalb des Bodens (4) einlaminiert oder eingegossen ist und der Boden (4) zumindest ein Element der Gruppe Senke (7) oder Sumpf (8) aufweist, aus dem verflüssigtes Reduktionsmittel entnehmbar ist, wobei die zumindest eine Seitenwand (3) oder der Boden (4) eine Oberfläche (13) aufweist und auf dieser Oberfläche (13) zumindest teilweise Kanalstrukturen (14) ausgebildet sind, die im Wesentlichen in Richtung hin zu der Senke (7) oder dem Sumpf (8) verlaufen.

2. Tank (1) nach Patentanspruch 1, wobei der Tank (1) zumindest teilweise einen sich in Richtung des Bodens (4) vergrößernden Querschnitt (6) aufweist.

3. Tank (1) nach Patentanspruch 1, wobei der Boden (4) zumindest in Teilbereichen ein progressives Gefälle wenigstens in Richtung der Senke (7) oder des Sumpfes (8) aufweist.

4. Tank (1) nach einem der vorhergehenden Patentansprüche, wobei wenigstens die Seitenwand (3) oder der Boden (4) zumindest einen Steg (9) aufweist, der sich in ein Tankinneres (10) hinein erstreckt, und der zumindest eine Steg (9) eine Heizeinrichtung (5) aufweist.

5. Tank (1) nach einem der vorhergehenden Patentansprüche, wobei zur Entnahme von Reduktionsmittel (2) aus dem Tank (1) ein Entnahmerohr (11) vorgesehen ist, und das Entnahmerohr (11) durch zumindest eine Heizeinrichtung (5) beheizt wird.

6. Tank (1) nach Patentanspruch 5, wobei das Entnahmerohr (11) zumindest eine Rippe (12) auf einer Außenumfangsfläche (13) aufweist, und das Entnahmerohr (11) und die zumindest eine Rippe (12) durch zumindest eine Heizeinrichtung (5) beheizt werden.

7. Tank (1) nach einem der vorhergehenden Patentansprüche, wobei die Heizeinrichtungen (5), angeordnet in zumindest einem Element der Gruppe Seitenwand (3), Boden (4), Steg (9), Entnahmerohr (11), Rippe (12), voneinander unabhängig regelbar sind.

8. Tank (1) nach einem der vorhergehenden Patentansprüche, wobei die zumindest eine Heizeinrichtung (5) ein PTC-Element aufweist.

9. Tank (1) nach einem der vorhergehenden Patentansprüche, wobei die Heizeinrichtung (5) zumindest teilweise Motorkühlwasser als Heizmedium verwendet.

10. Tank (1) nach einem der vorhergehenden Patentansprüche 4 bis 9, wobei der Steg (9) oder die zumindest eine Rippe (12) eine Oberfläche (13) aufweist und auf dieser Oberfläche (13) zumindest teilweise Kanalstrukturen (14) ausgebildet sind, wobei insbesondere auch diese Kanalstrukturen im Wesentlichen in Richtung hin zu der Senke (7) oder dem Sumpf (8) verlaufen.

11. Kraftfahrzeug (15) mit einem Tank (1) gemäß einem der vorhergehenden Patentansprüche.

## Claims

1. Tank (1) for a reducing agent (2), at least having at least one side wall (3) and a base (4), wherein at least one heating unit (5) is provided at least in the side wall (3) or in the base (4), wherein the heating unit is integrally molded or laminated within the side wall (3) and/or within the base (4), wherein the base (4) has at least one element from the group comprising depression (7) or sump (8) wherein liquefied reducing agent can be extracted from there, wherein the at least one side wall (3) or the base (4) has a surface (13), and channel structures (14) are provided on at least a part of said surface (13) wherein the channel structures (14) run substantially in the direction of the depression (7) or sump (8).

2. Tank (1) according to claim 1, wherein the tank (1) at least partially has a cross section (6) which increases in size in the direction of the base (4).

3. Tank (1) according to claim 1, wherein the base (4) comprises, at least in partial regions, a progressive slope at least in the direction of the depression (7) or of the sump (8).

4. Tank (1) according to one of the preceding claims, wherein at least the side wall (3) or the base (4) comprises at least one bar (9) which extends into a tank interior (10), and the at least one bar (9) has a heating unit (5).

5. Tank (1) according to one of the preceding claims, wherein an extraction pipe (11) is provided for the extraction of reducing agent (2) from the tank (1), and the extraction pipe (11) is heated by means of at least one heating unit (5).

6. Tank (1) according to claim 5, wherein the extraction pipe (11) comprises at least one rib (12) on an outer circumferential surface (13), and the extraction pipe (11) and the at least one rib (12) are heated by means of at least one heating unit (5).

7. Tank (1) according to one of the preceding claims, wherein the heating units (5), arranged in at least one element from the group comprising side wall (3), base (4), bar (9), extraction pipe (11) and rib (12), can be controlled independently of one another.

8. Tank (1) according to one of the preceding claims, wherein the at least one heating unit (5) comprises a PTC element.

9. Tank (1) according to one of the preceding claims, wherein the heating unit (5) at least partially uses engine cooling water as heating medium.

10. Tank (1) according to one of claims 4 to 9, wherein the bar (9) or the at least one rib (12) has a surface (13), and channel structures (14) are provided on at least part of said surface (13), wherein in particular these channel structures (14) also run substantially into the direction of the depression (7) or the sump (8).

11. Motor vehicle (15) comprising a tank (1) according to one of the preceding claims.

## Revendications

1. Réservoir (1) pour un agent de réduction (2), au moins pourvu d'au moins une paroi latérale (3) et d'un fond (4), au moins dans la paroi latérale (3) ou dans le fond (4) au moins une installation de chauffage (5) étant prévue, l'installation de chauffage étant laminée ou versée en forme à l'intérieur de la paroi latérale (3) et/ou à l'intérieur du fond (4) et le fond (4) étant pourvu d'au moins un élément du groupe creux (7) ou dépôt de fond (8), duquel on peut prélever de l'agent de réduction liquéfié, au moins une paroi latérale (3) ou le fond (4) ayant une surface (13) et sur cette surface (13) des structures de canal (14) étant au moins formées au moins partiellement qui s'étendent sensiblement en direction du creux (7) ou du dépôt de fond (8).

2. Réservoir (1) selon la revendication 1, le réservoir (1) comportant au moins partiellement une section transversale (6) s'agrandissant en direction du fond (4).

3. Réservoir (1) selon la revendication 1, le fond (4) ayant au moins dans des régions partielles, une pente progressive, au moins en direction du creux (7) ou du dépôt de fond (8).

4. Réservoir (1) selon l'une des revendications précédentes, au moins la paroi latérale (3) ou le fond (4) disposant au moins d'une traverse (9) qui s'étend dans un intérieur de réservoir (10) et l'au moins une traverse (9) ayant au moins une installation de chauffage (5).

5. Réservoir (1) selon l'une des revendications précédentes, un tuyau de soutirage (11) étant prévu pour le prélèvement d'agent de réduction (2) du réservoir (1) et le tuyau de soutirage (11) étant chauffé par au moins une installation de chauffage (5).

6. Réservoir (1) selon la revendication 5, le tuyau de soutirage (11) ayant au moins une ailette (12) sur une surface extérieure circonférentielle (13) et le tuyau de soutirage (11) et l'au moins une ailette (12) sont chauffés par au moins une installation de chauffage (5).

7. Réservoir (1) selon l'une des revendications précédentes, les installations de chauffage (5), agencées dans au moins un élément du groupe paroi latérale (3), fond (4), traverse (9), tuyau de soutirage (11), ailette (12), sont réglables indépendamment l'un de l'autre.

8. Réservoir (1) selon l'une des revendications précédentes, l'au moins une installation de chauffage (5) étant pourvue d'un élément PCT.

9. Réservoir (1) selon l'une des revendications précédentes, l'installation de chauffage (5) utilisant au moins partiellement de l'eau de refroidissement du moteur comme médium chauffant.

10. Réservoir (1) selon l'une des revendications précédentes 4 à 9, la traverse (9) ou l'au moins une ailette (12) étant pourvue d'une surface (13) et sur cette surface (13) des structures de canal (14) étant formées au moins partiellement, ces structures de canal s'étendant notamment sensiblement en direction du creux (7) ou du dépôt de fond.

11. Véhicule automobile (15) avec un réservoir (1), selon l'une des revendications précédentes.
